Europäisches Patentamt

European Patent Office

Office européen des brevets

(19)

(11) Veröffentlichungsnummer: **0 152 135**
**B1**

# (12) EUROPÄISCHE PATENTSCHRIFT

(45) Veröffentlichungstag der Patentschrift:
03.06.87

(21) Anmeldenummer: 85200089.2

(22) Anmeldetag: **29.01.85**

(51) Int. Cl.⁴: **H 04 L 17/00**

(54) Verfahren zur Uebertragung von Zeichen mittels Codewörtern eines Telegraphen-Alphabets, insbesondere des Internationalen Telegraphen-Alphabets Nr. 2, und Vorrichtung zur Ausführung desselben.

(30) Priorität: **10.02.84 CH 649/84**

(43) Veröffentlichungstag der Anmeldung:
**21.08.85 Patentblatt 85/34**

(45) Bekanntmachung des Hinweises auf die Patenterteilung:
**03.06.87 Patentblatt 87/23**

(84) Benannte Vertragsstaaten:
**AT BE CH DE FR GB IT LI LU NL SE**

(56) Entgegenhaltungen:
**EP - A - 0 085 936**

(73) Patentinhaber: **Hasler AG, Belpstrasse 23,
CH-3000 Bern 14 (CH)**

(72) Erfinder: **Marbet, Hans, Thujaweg 77,
CH-3322 Mattstetten (CH)**

(74) Vertreter: **Schwerdtel, Eberhard, Dr. et al, c/o Hasler AG
Belpstrasse 23, CH-3000 Bern 14 (CH)**

**Beschreibung**

Die Erfindung betrifft ein Verfahren zur Übertragung von Zeichen mittels Codewörtern eines Telegraphen-Alphabets, insbesondere des Internationalen Telegraphen-Alphabets Nr. 2 (ITA Nr. 2), entsprechend dem Oberbegriff von Anspruch 1. Die Erfindung betrifft weiter eine Vorrichtung zur Ausführung des Verfahrens.

Zur Verwendung auf internationalen Telegraphenleitungen ist von der internationalen Normungsstelle CCITT das Internationale Telegraphen-Alphabet ITA Nr. 2 eingeführt. Dieses verwendet zur Übertragung Zeichenrahmen, die aus einem Anlaufschritt, einer Fünfschrittgruppe und einem Sperrschritt bestehen. Mit Hilfe der fünf Schritte der Fünfschrittgruppe lassen sich 32 verschiedene Kombinationen bilden, die einen Satz einer entsprechenden Anzahl von Codewörten darstellen.

Diesem Satz von Codewörtern ist zum einen das lateinische Alphabet, d.h. ein Satz von Buchstaben (auch Buchstabenreihe genannt) und zum anderen ein Satz von Ziffern und Zeichen (auch Zeichenreihe genannt) zugeordnet. Zum Wechseln vom Buchstaben-Satz auf den Ziffern/Zeichen-Satz wird eines der Codewörter als Zeichen-Umschalt-Codewort und zum umgekehrten Wechsel entsprechend ein Buchstaben-Umschalt-Codewort verwendet. Bei mehrfacher Aussendung dieser Codewörter entsteht keine weitere Wirkung beim Empfänger.

Ältere Fernschreibmaschinen, die das Internationale Telegraphen-Alphabet Nr. 2 verwenden, weisen zur Texteingabe eine Tastatur auf, bei der jede Taste zum einen dem Ziffern/Zeichen-Satz und zum andern dem Buchstaben-Satz zugeordnet ist. Der Übergang vom einen Satz zum anderen Satz erfolgt jeweils durch Betätigen einer Umschalttaste, wodurch auf die Übertragungsleistung das entsprechende Umschalt-Codewort ausgesendet wird. Neuere Fernschreibmaschinen besitzen häufig eine sogenannte Volltastatur, bei der sowohl für den Buchstaben- als auch für den Ziffern/Zeichen-Satz ein Satz von Eingabetasten vorhanden ist. Weiter sind meistens eine oder mehrere Umschalttasten vorgesehen, mittels der sich weniger häufig benötigte Zeichen als Zweitbedeutung der Tasten anwählen lassen. Bei derartigen Volltastaturen erfolgt beim Wechsel vom einen Satz zum anderen jeweils automatisch die Aussendung des entsprechenden Umschalt-Codewortes.

Aus der Schrift DE-A-2 640 848 ist eine Fernschreibmaschine bekannt, die zusätzlich zum Satz der Kleinbuchstaben den Satz der Grossbuchstaben aufweist. Einzelne Buchstaben dieses Satzes lassen sich durch Betätigung einer Umschalttaste Gross/Kleinschreibung aufrufen. Hierdurch wird jeweils unmittelbar vor der Aussendung des Codewortes des jeweiligen Buchstabens ein Buchstaben-Umschalt-Codewort ausgesendet. Der Empfänger erkennt dieses Umschalt-Codewort, schaltet auf den Satz der Grossbuchstaben um, druckt den jeweiligen Buchstaben als Grossbuchstaben aus und schaltet zurück zum Satz der Kleinbuchstaben. Auf diese Weise wird eine orthographisch richtige Gross-/Kleinschreibung bei Fernschreibmaschinen erreicht.

Aus der Schrift EP-A-0 085 936 ist eine weitere Fernschreibmaschine bekannt, bei der zur Umschaltung zwischen bis zu vier Zeichensätzen ein Satz von Befehlswörtern verwendet wird. Die Befehlswörter sind entweder aus einem einzigen oder aus der Kombination von zwei Umschalt-Codewörtern gebildet. Alle den Befehlswörtern nachfolgenden Zeichen-Codewörter werden hierdurch jeweils einem der Zeichensätze zugeordnet.

Beiden Fernschreibmaschinen gemeinsam ist die Möglichkeit der Gross- und Kleinschreibung. In beiden Fällen wird die nach ITA Nr. 2 ohne Wirkung bleibende Mehrfachaussendung der Umschalt-Codewörter eingeschränkt zur Übermittlung von zusätzlichen Umschalt-Informationen. In beiden Fällen ist jedoch volle Kompatibilität der Maschinen mit solchen Fernschreibmaschinen gewährleistet, die nur die herkömmlichen zwei Zeichensätze verarbeiten können. Und schliesslich benötigt jede der beiden Fernschreibmaschinen aufgrund der zusätzlich zu übertragenden Umschalt-Codewörter zusätzliche Zeit bei der Übertragung von Texten, die abhängig von der Art des Textes beträchtlich sein kann.

Die Aufgabe der Erfindung besteht nun darin, bei Fernschreibmaschinen mit der Möglichkeit zur Gross- und Kleinschreibung die Zahl der zusätzlich zu übertragenden Umschalt-Codewörter zu minimieren, um auf diese Weise die Übertragungszeit zu verringern. Diese Minimierung soll weitgehend unabhängig sein von der Art des zu übertragenden Textes. Der sich hieraus ergebende Vorteil möglichst kurzer Übertragungszeit ist offensichtlich.

Die Lösung der genannten Aufgabe ist gekennzeichnet durch die kennzeichnenden Teile der unabhängigen Ansprüche. Die anderen Ansprüche geben Ausgestaltungen der Erfindung an.

Im folgenden wird die Erfindung anhand von drei Figuren beispielsweise näher beschrieben. Es zeigen:

Fig. 1 auszugsweise Tabelle des internationalen Telegraphen-Alphabets Nr. 2

Fig. 2 Blockschaltbild einer Fernschreibmaschine

Fig. 3 Tabelle für die Zuordnung der Umschalt-Codewörter.

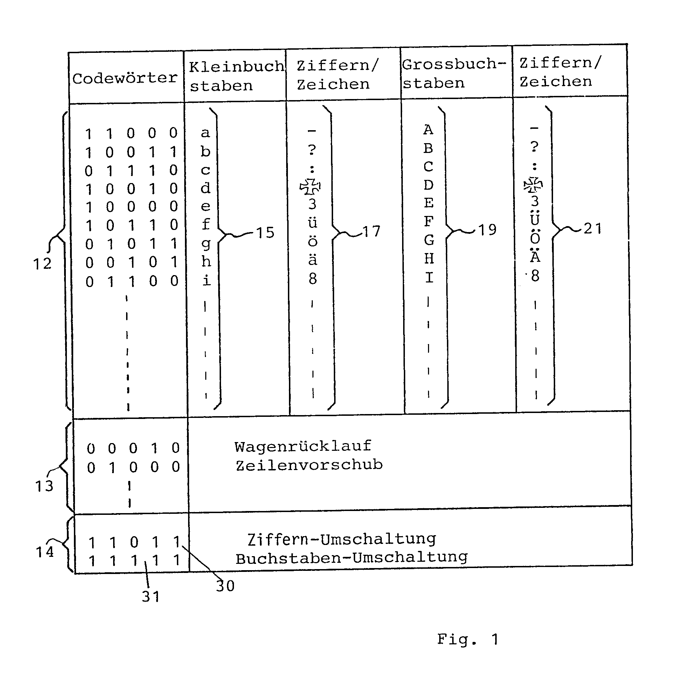

Fig. 1 zeigt tabellenförmig und ausschnittweise das Internationale Telegraphen-Alphabet Nr. 2. In der linken Spalte sind die verwendbaren Fünfschrittgruppen bzw. Codewörter 12, 13, 14 aufgelistet. In den nächsten Spalten sind die zugeordneten Zeichensätze der Kleinbuchstaben (15), der Ziffern/Zeichen/kleine Umlaute (17), der Grossbuchstaben (19) und Ziffern/Zeichen/grosse Umlaute (21) aufgelistet.

Die Zuordnung gilt zeilenweise. Im oberen Teil der Tabelle ist die Gruppe 12 der Zeichen-Codewörter angegeben. Darunter folgt die Gruppe 13 der Steuer-Codewörter, von der die Codewörter für Wagenrücklauf und Zeilenvorschub gezeigt sind. Ganz unten ist schliesslich die Gruppe 14 der Umschalt-Codewörter gezeigt. Diese Gruppe umfasst nur das Ziffern-Umschalt-Codewort 30 und das Buchstaben-Umschalt-Codewort 31.

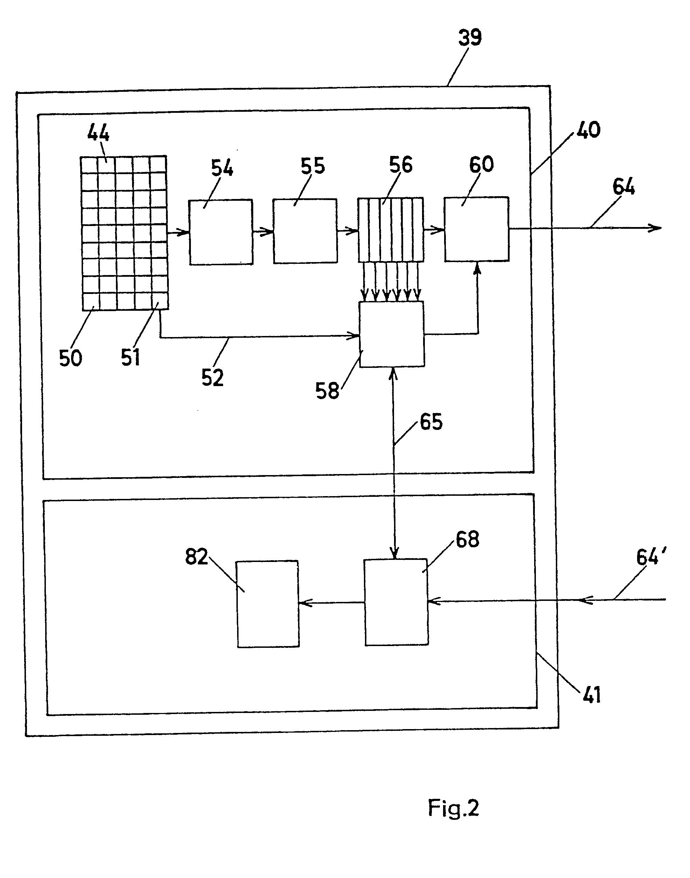

Fig. 2 zeigt das Blockschaltbild einer Fernschreibmaschine 39 mit einem Sendeteil 40 und einem Empfangsteil 41. Die Maschine 39 ist über eine Sendeleitung 64 und eine Empfangsleitung 64' mit einer zweiten, nicht gezeigten Fernschreibmaschine so gekoppelt, dass die Sende- mit den Empfangsteilen paarweise mittels des internationalen Telegraphen-Alphabets Nr. 2 zusammenarbeiten. Der Sendeteil 40 ist intern mit dem Empfangsteil 41 über eine Leitung 65 verbunden.

Der Sendeteil 40 umfasst eine Tastatur 44 zur Eingabe von Ziffern, Zeichen und Buchstaben mittels vorwiegend je einer separaten Taste. Die Tastatur umfasst weiter Tasten für die Anwahl von Zeichen, die als Zweitbedeutung der erstgenannten Tasten eingebbar sind. So dient die Taste 50 für die kurzzeitige Umschaltung von Kleinbuchstaben nach Grossbuchstaben und die Taste 51 vor allem für die Dauerumschaltung zu Grossbuchstaben für eine generelle Grossschreibung.

Der Tastatur 44 ist ein Codierer 54 zugeordnet, welcher für jedes ausgewählte bzw. eingegebene Zeichen ein internes Codewort von z.B. 7 Bit abgibt, das das Zeichen vollständig kennzeichnet. Die internen Codewörten laufen in der Reihenfolge ihrer Erzeugung in einen Speicher 55 ein, der bevorzugt im Sinne eines «First-in-first-out»-Speichers (FIFO) organisiert ist. Das Auslesen der gespeicherten internen Codewörten kann gleichzeitig mit dem Einlesen erfolgen oder zeitlich getrennt.

Beim Auslesen der internen Codewörter aus dem Speicher 55 durchlaufen die Wörter einen Überwachungsspeicher 56, der durch eine Logik 58 daraufhin überwacht wird, ob die im Speicher 55 enthaltenen Codewörter einheitlich ein und demselben Zeichensatz 15, 17, 19 oder 21 angehören, ob ein oder mehrere Wechsel von einem Zeichensatz zu einem anderen vorkommen und wieviele Zeichen zwischen den Wechseln liegen.

Aufgrund dieser Überwachung steuert die Logik 58 einen Codewandler 60, der in der (durch die Eingabe vorgegebenen) Reihenfolge des Auslesens und Aussendens die internen 7-Bit-Codewörter in Telegraphen-Alphabet-Codewörter 12 bzw. 13 umwandelt und bei Wechseln von einem Zeichensatz zu einem anderen in noch zu beschreibender Weise Umschalt-Codewörter 30, 31 in den Fluss der auszusendenden Wörter einschiebt. Die Codewörter 12, 13, 14 werden sodann im Takt des Sendeteils 40 oder im Takt der Leitung 64 auf diese Leitung ausgesendet.

Im Empfangsteil 41 wandelt eine Decodierlogik 68 die ankommenden Codewörter 12, 13 in interne Codewörter (z.B. 7 Bit) um. Diesen internen Codewörtern wird hierbei Information darüber beigefügt, welchem der Zeichensätze 15, 17, 19, 21 das zugeordnete Zeichen zugehört. Diese Information entnimmt die Logik 68 den ankommenden Umschalt-Codewörtern 30, 31. Die Logik 68 unterscheidet bei der Decodierung, ob die Umschalt-Codewörter einzeln, gefolgt von wenigstens einem beliebigen Zeichen-Codewort 12 oder Steuer-Codewort 13 auftreten oder zu zweit in direkter Aufeinanderfolge.

Eine geeignete Druckeinrichtung 82, z.B. ein Nadeldrucker, druckt anschliessend die empfangenen Zeichen aus.

Die Fernschreibmaschine 39 arbeitet auf der Sende- 64 und Empfangsleitung 64' auschliesslich mit zugelassenen Codewörtern 12, 13, 14.

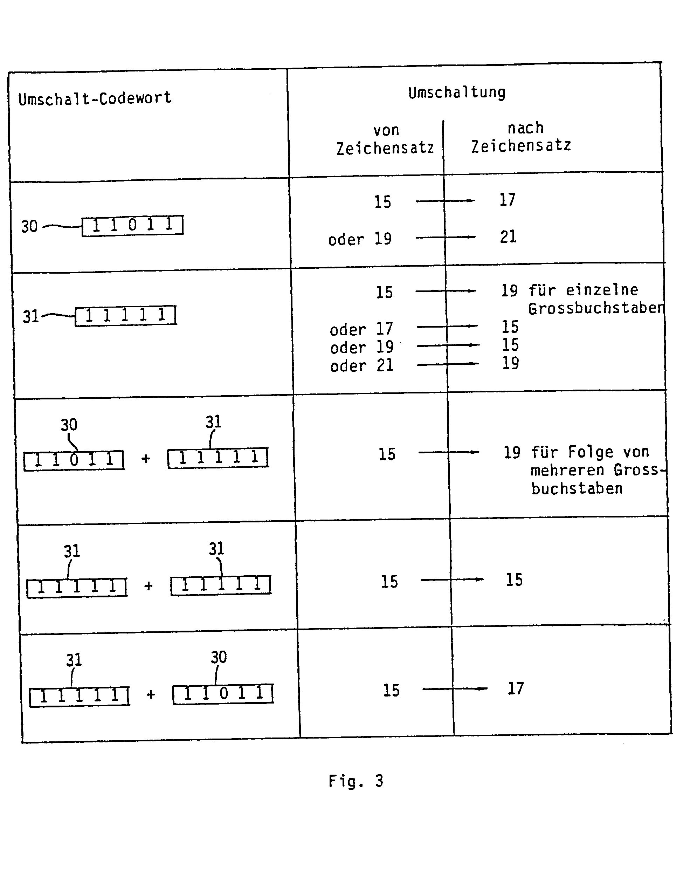

Fig. 3 zeigt, wie die Umschalt-Codewörter 30 und 31 eingesetzt werden. Danach führt das Ziffern-Umschalt-Codewort 30, je nachdem, welchem Buchstabensatz das vorhergehende Zeichen-Codewort 12 angehörte, zu einem der beiden Ziffern/Zeichen-Sätze 17 oder 21. Das Buchstaben-Umschalt-Codewort 31 führt umgekehrt von den Ziffern/Zeichen-Sätzen 17, 21 zu den Buchstaben-Sätzen 15 bzw. 19. Weiter führt ein einzelnes Codewort 31 zum Wechsel vom Satz der Kleinbuchstaben 15 für ausschliesslich einen einzigen Grossbuchstaben zum Satz der Grossbuchstaben 19. In diesem Fall erfolgt sowohl in der Logik 58 des Sendeteils 40 als auch in der Decodierlogik 68 des Empfangsteils 41 sofort nach der Umcodierung des jeweiligen Buchstaben-Zeichens ein Rücksprung zum Satz der Kleinbuchstaben 15. Das Buchstaben-Umschalt-Codewort 31 führt schliesslich nach einer Folge von Grossbuchstaben zum Wechsel vom Satz der Grossbuchstaben 19 zum Satz der Kleinbuchstaben 15.

Die Kombination von zwei in direkter Aufeinanderfolge ausgesendeten Umschalt-Codewörten 30 plus 31 führt zum Wechsel vom Satz der Kleinbuchstaben 15 zum Satz der Grossbuchstaben 19, und zwar ausschliesslich bei einer Folge von mehreren Grossbuchstaben.

Die Folge von zwei oder mehr direkt aufeinanderfolgenden Buchstaben-Umschalt-Codewörtern 31, auftretend beispielsweise durch Überstanzungen zum Zweck der Fehlerkorrektur bei 5-Kanal-Lochstreifen, bleibt ohne Wirkung, wenn die vorhergehenden Zeichen Kleinbuchstaben waren.

Wurden Überstanzungen zur Korrektur von Ziffern/Zeichen vorgenommen, so führen ein oder mehrere der entstandenen Buchstaben-Umschalt-Codewörter 31 plus ein nachfolgendes Ziffern-Umschalt-Codewort 30 zurück zu einem der Sätze der Ziffern/Zeichen 17 oder 21.

Das Wissen darüber, ob ein einzelner Grossbuchstaben oder eine Folge aus mehreren Grossbuchstaben übertragen und ausgedruckt werden soll, entnimmt die Logik 58 dem Überwachungsspeicher 56. Dieser enthält beispielsweise die sechs im Fluss der Aussendung nächstfolgenden internen Codewörter bzw. Zeichen. Bedeuten einzelne dieser Codewörter Grossbuchstaben, so wird vor jedem dieser Grossbuchstaben entsprechend der oben angegebenen Anweisung jeweils ein Buchstaben-Umschalt-Codewort 31 ausgesandt. Erkennt die Logik 58 dagegen eine Folge von mehreren direkt aufeinanderfolgenden Grossbuchstaben, so schiebt sie vor dem ersten dieser Grossbuchstaben die Kombination der Umschalt-Codewörter 30 und direkt nachfolgend 31 zur Aussendung auf die Leitung 64 ein. Werden mehrere Grossbuchstaben durch Ziffern/Zeichen, Leerschläge oder Steuerzeichen (z.B. Wagenrücklauf) getrennt, so werden sie wie direkt aufeinanderfolgende Grossbuchstaben angesehen. Das Kriterium für «einzelne Grossbuchstaben» bilden damit vor allem einzelne oder Folgen von mehreren Kleinbuchstaben, die die Grossbuchstaben trennen.

Aus der Art der Anweisung über die Verwendung der Umschalt-Codewörte 30 und 31 ergibt sich, dass bei einem oder zwei aufeinanderfolgenden Grossbuchstaben entweder ein bzw. insgesamt zwei Umschalt-Codewörter 31 erforderlich sind. Bei vier und mehr aufeinanderfolgenden Grossbuchstaben sind zwei plus eins (für die Rückkehr zu Kleinbuchstaben) Umschalt-Codewörter 30 und 31 erforderlich. Bei drei aufeinanderfolgenden Grossbuchstaben sind unabhängig von der jeweiligen Anweisung jeweils drei Umschalt-Codewörter erforderlich. Hier liegt somit die Grenze für «einzelne Grossbuchstaben» und für «Folge von Grossbuchstaben». Aufgrund der «vorausschauenden» Arbeitsweise der Logik 58 in Zusammenhang mit dem Überwachungsspeicher 56 ist somit eine Minimierung der Anzahl auszusendender Umschalt-Codewörter 30 und 31 bei beliebigen Fogen von Klein- und Grossbuchstaben möglich, d.h. unabhängig von der Art des jeweiligen zu übertragenden Textes.

Ist aufgrund von Dialogverkehr zwischen der Fernschreibmaschine 39 und der über die Leitung 64, 64' angeschlossenen Partnermaschine der Überwachungsspeicher 56 nicht vollständig gefüllt, so kann die Logik 58 auf die beschriebene Weise nicht entscheiden, ob die nachfolgenden internen Codewörter einzelne Grossbuchstaben oder eine Folge von Grossbuchstaben bezeichnen. In diesem Fall wird über eine Leitung 52 der Logik 58 mitgeteilt, ob die Taste 51 für Dauerumschaltung zu Grossbuchstaben betätigt ist oder nicht. Ist diese Taste in Arbeitsstellung, so ist hierin die Absicht zu erkennen, dass die nachfolgenden Zeichen Grossbuchstaben sein werden. Die Logik 58 erwartet in diesem Fall somit eine Folge von mehreren Grossbuchstaben.

Die Verwendung von zwei Sätzen für Ziffern/Zeichen 17 und 21 unterstützt die Minimierung von erforderlichen Umschalt-Codewörtern 30, 31, denn unabhängig davon, ob Folgen von Klein- oder Grossbuchstaben mit Ziffern und Zeichen vermischt sind, erfolgt der Wechsel jeweils mit nur einem Umschalt-Codewort. Einzig beim Übermitteln von kleinen und grossen Umlauten können für den Wechsel mehr als ein Umschalt-Codewort 30, 31 notwendig sein, die dann über Zwischenwechsel zum richtigen Satz der Ziffern/Zeichen 17 oder 21 führen.

Die beschriebene Fernschreibmaschine 39 ist einfach im Aufbau und voll kompatibel mit allen herkömmlichen Fernschreibern. Sie erlaubt Gross- und Kleinschreibung von Buchstaben bei minimalem Aufwand von Umschalt-Codewörten 30, 31. Beim Empfang von Texten , die ab korrigiertem 5-Kanal-Lochstreifen gesendet werden, d.h. von einem Lochstreifen, der Folgen von Überstanzungen entsprechend den Buchstaben-Umschalt-Codewörtern 31 enthält, druckt der Empfangsteil 41 den empfangenen Text voll lesbar aus. Enthält der Lochstreifen eine einzige Überstanzung, so wird «fehlerhaft» ein Grossbuchstabe statt eines Kleinbuchstabens gedruckt. Bei mehreren aufeinanderfolgenden Überstanzungen dagegen entsteht im Ausdruck kein Fehler.

An Varianten der Vorrichtung, wie sie beschrieben wurde, sollen folgende genannt werden:

Die Vorrichtung zum Übertragen von Zeichen kann aus zwei Fernschreibern bestehen, aus einer reinen Sendeeinrichtung und einer reinen Empfangseinrichtung, aus Sende/Empfangs-Einrichtungen für Halbduplex- oder Vollduplexbetrieb usw. Vor allem bei Halbduplexbetrieb ist die Leitung 65 erforderlich zum internen Austausch von Information zwischen dem Sende- 40 und dem Empfangsteil 39.

Der Begriff «Fernschreiber» ist weit auszulegen und kann z.B. eine Textver- bzw. -bearbeitungseinrichtung sein, die mittels eines Adapters angepasst ist an die Gegebenheiten von ITA Nr. 2. Statt des ITA Nr. 2 kann das beschriebene Verfahren auch mit jedem anderen Telegraphen-Alphabet, das Umschalt-Codewörter verwendet, durchgeführt werden.

Die Tastatur 44 bildet Auswahlmittel zur seriellen Auswahl der zu übertragenden Zeichen im weitesten Sinne des Wortes. Sie kann damit beliebig ausgebildet sein. Das gleiche gilt für die Druckeinrichtung 82 zur Darstellung der empfangenen Zeichen in beliebiger Weise. Als Ausgabemittel umfasst der Begriff (82) somit beispielsweise auch eine Bildschirmanzeige.

Die Entscheidungsmittel zur «vorausschauenden» Unterscheidung, ob einzelne Grossbuchstaben oder Folgen von mehreren Grossbuchstaben zu übertragen sind, können auf verschiedene Weise ausgebildet sein. Insbesondere kann der Überwachungsspeicher 56 als separater Speicher, z.B. als Schieberegister, oder als Teilspeicher des im allgemeinen grösserer Vorrats- bzw. Textspeichers 55 vorgesehen sein. Der Umfang des der Überwachung zugänglichen Speicherbereiches muss wenigstens drei interne Codewörter umfassen, er kann jedoch beliebig gross sein oder sogar den gesamten Speicher 55, 56 umfassen.

**Patentansprüche**

1. Verfahren zur Übertragung von Zeichen mittels Codewörtern eines Telegraphen-Alphabets, insbesondere des Internationalen Telegraphen-Alphabetes Nr. 2 (ITA Nr. 2),
— wobei die Zeichen in Ein- oder Mehrfachzuordnung Zeichen-Codewörtern (12) so zugeordnet sind, dass dem Satz aller Codewörter (12, 13, 14) wenigstens ein Satz der Kleinbuchstaben (15), ein Satz der Grossbuchstaben (19) und ein Satz der Ziffern/Zeichen (17) entspricht,
— wobei die Zuordnung der Zeichen-Codewörter (12) zu den Zeichensätzen (15, 17, 19, 21) aufgrund vorgängig ausgesendeter Umschalt-Codewörter (30, 31) jeweils festgelegt wird,
dadurch gekennzeichnet, dass die Zuordnung der Zeichen-Codewörter (12) zum Satz der Grossbuchstaben (19) auf zwei verschiedene Weisen erfolgt in Abhängigkeit davon, ob einzelne Zeichen dieses Satzes (19) zu übertragen sind oder Folgen von mehreren Zeichen dieses Satzes (19), wobei die Folge durch Zeichen des Satzes der Ziffern/Zeichen (17) und/oder durch Steuerzeichen (z.B. Wagenrücklauf) unterbrochen sein kann.

2. Verfahren nach Anspruch 1, daduch gekennzeichnet,
— dass vorgängig der Aussendung der Codewörter (12, 13) entschieden wird, ob in der Reihe der zu übretragenden Zeichen Zeichen enthalten sind, die dem Satz der Grossbuchstaben (19) angehören, und ob diese Zeichen einzeln oder in Folgen von mehreren Grossbuchstaben auftreten,

— dass beim Wechsel vom Satz der Kleinbuchstaben (15) zum Satz der Grossbuchstaben (19) für Folgen von mehreren Grossbuchstaben die Zuordnung durch die Kombination von einem Ziffern-Umschalt-Codewort (30) plus einem direkt nachfolgenden Buchstaben-Umschalt-Codewort (31) erfolgt, und

— dass beim Wechsel vom Satz der Kleinbuchstaben (15) zum Satz der Grossbuchstaben (19) für einzelne Grossbuchstaben die Zuordnung durch ein einziges Buchstaben-Umschalt-Codewort (31) erfolgt mit anschliessendem automatischen Rückwechsel zum Satz der Kleinbuchstaben (15).

3. Verfahren nach Anspruch 1, dadurch gekennzeichnet,

dass eine Folge von Buchstaben-Umschalt-Codewörtern (31) anschliessend an ein Zeichen des Satzes der Kleinbuchstaben (15) keine Zuordnung zu einem anderen Zeichensatz (17, 19) bewirkt.

4. Verfahren nach Anspruch 1, dadurch gekennzeichnet,

— dass ein zweiter Satz der Ziffern/Zeichen (21) vorgesehen wird,

— dass der eine Satz der Ziffern/Zeichen (17) dem Satz der Kleinbuchstaben (15) und der andere (21) dem Satz der Grossbuchstaben (19) zugeordnet wird,

— dass jeweils beim Wechsel vom jeweiligen Satz der Buchstaben (15 bzw. 19) zum zugeordneten Satz der Ziffern/Zeichen (17 bzw. 21) die Zuordnung durch ein einzelnes Ziffern-Umschalt-Codewort (30) erfolgt, und

— dass beim jeweiligen umgekehrten Wechsel die Zuordnung durch ein einzelnes Buchstaben-Umschalt-Codewort (31) erfolgt.

5. Verfahren nach Anspruch 1, dadurch gekennzeichnet,

dass beim Wechsel vom Satz der Grossbuchstaben (19) zum Satz der Kleinbuchstaben (15) die Zuordnung durch ein einzelnes Buchstaben-Umschalt-Codewort (31) erfolgt.

6. Vorrichtung zur Ausführung des Verfahrens nach Anspruch 1,

— wobei wenigstens ein Sender (40) vorgesehen ist mit Auswahlmitteln (44) zur Eingabe der jeweils zu übertragenden Zeichen, mit einem Speicher (55) zur Zwischenspeicherung der eingegebenen Zeichen vor ihrer Aussendung als Zeichen- (12) oder Steuer-Codewort (13), und mit einer Logik (58) zur Bereitstellung der beim Wechsel von einem Zeichensatz (15, 17, 19, 21) zum anderen auszusendenden Umschalt-Codewörter (30, 31),

— und wobei wenigstens ein Empfänger (41) vorgesehen ist mit einer Decodierlogik (68) zur Decodierung der empfangenen Codewörter (12, 13, 14), zur Zuordnung der Zeichen-Codewörter (12) zu jeweils einem der Zeichensätze (15, 17, 19, 21) aufgrund der vorgängig empfangenen Umschalt-Codewörter (30, 31) und mit Ausgabemitteln (82) zur Sichtbarmachung der empfangenen Zeichen, dadurch gekennzeichnet im Sender (40),

— dass Entscheidungsmittel vorgesehen sind zur Entscheidung, ob in der Reihe der nachfolgend auszusendenden Zeichen einzelne oder eine Folge von mehreren Zeichen dem Satz der Grossbuchstaben (19) angehören, wobei die Folge durch Zeichen des Satzes der Ziffern/Zeichen (17) und/oder durch Steuerzeichen (z.B. Wagenrücklauf) unterbrochen sein kann,

— dass die Logik (58) in Abhängigkeit von der Ermittlung der Entscheidungsmittel entweder vor einzelnen Grossbuchstaben je ein einzelnes Buchstaben-Umschalt-Codewort (31) oder vor einer Folge von Grossbuchstaben ein Ziffern- (30) und direkt nachfolgend ein Buchstaben-Umschalt-Codewort (31) in die Reihe der auszusendenden Zeichen einfügt,

und dadurch gekennzeichnet im Empfänger (41),

— dass die Decodierlogik (68) eingerichtet ist zur Unterscheidung, ob die empfangenen Umschalt-Codewörter (30, 31) einzeln, gefolgt von wenigstens einem beliebigen Zeichen- (12) oder Steuer-Codewort (13) oder zu zweit in direkter Aufeinanderfolge auftreten, und

— dass sie (68) die Umschalt-Codewörter (30, 31) entsprechend unterschiedlich wertet.

7. Vorrichtung nach Anspruch 6, dadurch gekennzeichnet,

dass die Entscheidungsmittel aus einem Überwachungsspeicher (56) und der Logik (58) bestehen, derart, dass die Logik (58) den gesamten Inhalt des Speichers (56), entsprechend einer Mehrzahl von nächstfolgend auszusendenden Zeichen, abfragt und die Zeichen bezüglich ihrer Zugehörigkeit zu den verschiedenen Zeichensätzen (15, 17, 19, 21) überprüft.

8. Vorrichtung nach Anspruch 5, dadurch gekennzeichnet,

dass als Entscheidungsmittel eine Taste (51) der Tastatur (44) dient, bei deren Betätigung die generelle Grossschreibung eingestellt ist.

9. Vorrichtung nach Anspruch 6 und 7, dadurch gekennzeichnet,

dass der Überwachungsspeicher (56) ein Teilbereich des Speichers (55) zur Zwischenspeicherung der eingegebenen Zeichen ist.

## Claims

1. Method of transmitting characters by code combination of a telegraphic alphabet, in particular of the International Telegraphic Alphabet No. 2 (ITA No. 2),

— where the characters are assigned in a single or a multiple way to character code combinations (12), such that the complete set of code combinations (12, 13, 14) corresponds at least to one set of small letters (15), to one set of capital letters (19) and to one set of digits, punctuation marks and special characters (17),

— where the assignment of the character code combinations (12) to the sets of characters (15, 17, 19, 21) is based in each case on previously transmitted shift code combinations (30, 31),

characterized in, that the assignment of the character code combinations (12) to the set of capital letters (19) is achieved in two ways, depending on whether single characters or sequences of characters of this set (19) are to be transmitted, where the sequency may be interrupted by characters of the set of digits, punctuation marks and special characters (17) and/or control characters (13) (e.g. Carriage return).

2. Method according to claim 1, characterized in,
— that prior to the transmission of a code combination (12, 13) a decision takes place on whether a corresponding capital letter eventually occurring within the stream of characters to be transmitted is a single capital letter or is a capital letter of a sequence of capital letters,
— that where a sequence of capital letters follows a small letter, the corresponding change of the assignment of the code combination from the set of small letters (15) to the set of capital letters (19) is initiated by a combination of a figure-shift code combination (30) and a contiguously following letter-shift code combination (31), and
— that where a single capital letter follows a small letter, the corresponding change of the assignment of code combinations from the set of small letters (15) to the set of capital letters (19) is initiated by a single lettershift code combination (31).

3. Method according to claim 1, characterized in, that a sequence of letter-shift code combinations (31) following a character of the set of small letters (15) does not change the assignment to another set of characters (17, 19).

4. Method according to claim 1, characterized in
— that a second set of digits, punctuation marks and special characters (21) is provided,
— that the one set of digits, punctuation marks and special characters (17) is assigned to the set of small letters (15) and that the second set (21) is assigned to the set of capital letters (19),
— that for any change from one of the sets of letters (15 or 19) to the corresponding related set of digits, punctuation marks and special characters (17 or 21) the assignment change is initiated by a single figure-shift code combination (30), and
— that each change in the opposite direction is initiated by a single letter-shift code combination (31).

5. Method according to claim 1, characterized in, that for the change from the set of capital letters (19) to the set of small letters (15) the change of the assignment is initated by a single letter-shift code combination (31).

6. Device for applying the method according to claim 1,
— where at least a transmitter (40) is provided, containing a means of selection (44) for the input of the characters to be transmitted, a memory (55) for the intermediate storage of the input characters prior to their transmission as character code combinations (12) or control code combinations (13) and containing a logic circuit (59) for the selection of the shift code combinations (30, 31) which have to be sent to initiate the change between any sets of characters (15, 17, 19, 21),
— and where at least a receiver (41) is provided, containing a decoding device (68) for the decoding of the received code combinations (12, 13, 14) and for the assignment of each character code combination (12) to one of the sets of characters (15, 17, 19, 21) based on the previously received shift code combinations (30, 31), and containing a means of output (82) for the display or printing of the received characters, in the transmitter (40) characterized in,
— that a decision device is provided to decide, whether within the stream of characters to be transmitted there are single capital letters or there are sequences of capital letters, where a sequence may be interrupted by characters of the set of digits, punctuation marks and special characters (17) and/or by control characters (e.g. Carriage return),
— that the logic circuit (58), depending on the decision taken by the decision device, inserts in the stream of characters to be transmitted prior to each a single capital letter a single letter-shift code combination (31) and inserts prior to each a sequence of capital letters a combination of a figure-shift code combination (30) and a contiguously following letter-shift code combination (31), and in the receiver (41) characterized in,
— that a decision device (68) is provided to determine whether single or pairs of contiguous shift code combinations (30, 31) occur, both being followed by at least one arbitrary character code combination (12) or control code combination (13), and
— that the decision device (68) can appropriately evaluate the shift code combinations (30, 31).

7. Device according to claim 6, characterized in, that the decision device consists of a supervisory memory (56) and a logic circuit (58), such that the logic device examies the whole contents of the supervisory memory (56) being a limited number of characters next to be transmitted and that the logic device checks their assignment to the various sets of characters (15, 17, 19, 21).

8. Device according to claim 5, characterised in, that a key (51) on the keyboard (44) serves as the decision device, upon operation of which the capital letters mode applies to all letters.

9. Device according to claim 6 and 7, characterized in, that the supervisory memory (56) is an integral part of the memory (55) for the intermediate storage of the input characters.

**Revendications**

1. Procédé pour la transmission de caractères au moyen de mots de code d'un alphabet télégraphique, en particulier l'Alphabet Télégraphique International N° 2 (ITA N° 2)
— où les caractèrs sont associés de façon simple ou multiple à des mots de code (12) pour les caractères, de telle sorte qu'à l'ensemble complet de tous les mots de code (12, 13, 14) correspond au moins un ensemble de minuscules (15), un ensemble de majuscules (19) et un ensemble de chiffres et de signes (17);
— où l'association des mots de code (12) aux caractères aux ensembles de caractères (17, 17, 19, 21) est déterminée chaque fois sur la base de mots de code de passage (30, 31) émis précédemment, caractérisé en ce que l'association des mots de code (12) aux caractères à l'ensemble des majuscules (19) se fait de deux manières différentes, suivant que soient è transmettre des caractères uniques de cet ensemble (19) ou des suites de plusieurs caractères de cet ensemble (19), où la suite peut être interrompue par des caractères de l'ensemble (17) des chiffres et des signes et/ou par des signes de commande (par exemple rappel du chariot).

2. Procédé suivant la revendication 1, caractérisé
— en ce que, avant l'émission des mots de code (12, 13), il est distingué si, dans la série des caractères à transmettre, sont contenus des caractères qui appartiennent à l'ensemble des majuscules (19), et si ces caractères apparaissent comme uniques ou comme suites de plusieurs majuscules;
— en ce que, lors du changement de l'ensemble (15) des minuscules à l'ensemble (19) des majuscules, pour des suites de plusieurs majuscules, l'association a lieu par la combinaison d'un mot de code (30) de passage aux chiffres plus un mot de code (31) de passage aux lettres directement suivant; et
— en ce que, lors du changement de l'ensemble (15) des minuscules à l'ensemble (19) des majuscules, pour des majuscules uniques, l'association se fait par un mot de code (31) de passage aux lettres unique avec ensuite retour automatique à l'ensemble (15) des minuscules.

3. Procédé suivant la revendication 1, caractérisé en ce qu'une suite de mots de code (31) de passage aux lettres, faisant suite à un caractère de l'ensemble des minuscules (15), ne produit pas !'association à un autre ensemble de caractères (17, 19).

4. Procédé suivant la revendication 1, caractérisé
— en ce que l'on a prévu un deuxième ensemble de chiffres et de signes (21);
— en ce que l'un des ensembles (17) de chiffres et de signes est associé à l'ensemble (15) des minuscules et l'autre (21) à l'ensemble des majuscules (19);
— en ce que, chaque fois lors du changement de l'ensemble de lettres considéré chaque fois (15, respectivement 19) à l'ensemble associé de chiffres et de signes (17, respectivement 21), l'association se fait par un mot de code (30) de passage aux chiffres unique; et
— en ce que, à chaque changement inverse, l'association a lieu par un mot de code (31) de passage aux lettres unique.

5. Procédé suivant la revendication 1, caractérisé en ce que, lors du changement de l'ensemble (19) des majuscules à l'ensemble (15) des minuscules, l'association se fait par un mot de code (31) de passage aux lettres unique.

6. Dispositif pour la mise en œuvre du procédé suivant la revendication 1,
— où l'on a prévu au moins un émetteur (40) avec des moyens de sélection (44) pour l'entrée des caractères à transmettre chaque fois, avec une mémoire (55) pour l'emmagasinement intermédiaire des caractères entrés avant leur émission comme mots de code aux caractères (12), ou comme mots de code de commande (13), et avec une logique (58) pour préparer les mots de code de passage à transmettre lors du changement d'un ensemble de caractères (15, 17, 19, 21) à un autre; et
— où est prévu au moins un récepteur (41) avec une logique de décodage (68) pour décoder les mots de code (12, 13, 14) reçus, pour l'association des mots de code (12) aux caractères à chaque fois l'un des ensembles de caractères (15, 17, 19, 21) sur la base des mots de code de passage (30, 31) reçus précédemment, et avec des moyens de sortie (82) pour rendre visibles les caractères reçus; caractérisé en ce que, dans l'émetteur (40)
— des moyens de décision sont prévus pour distinguer si, dans la suite des caractères à transmettre ensuite, des caractères uniques, ou bien une suite de plusieurs caractères, appartiennent à l'ensemble des majuscules (19), la suite pouvant être interrompu par des caractères de l'ensemble des chiffres et des signes (17) et/ou par des signes de commande (par exemple rappel du chariot);
— la logique (58), en dépendance de la décision prise par les moyens de décision, introduit soit devant des majuscules uniques, chaque fois un mot de code (31) de passage aux lettres unique, soit avance devant une suite de majuscules un mot de code de passage aux chiffres (30) et immédiatement ensuite un mot de code (31) de passage aux lettres dans la série des caractères à émettre, et caractérisé, dans le récepteur (41),
— en ce que la logique de décodage (68) est organisée pour distinguer si les mots de code de passage (30, 31) reçus apparaissent uniques, suivis d'au moins un mot de code de passage aux caractères (12) ou d'un mot de code de commande (13), ou en suite directe de deux, et
— en ce que la logique de décodage (68) distingue de façon correspondante les mots de code de passage (30, 31).

7. Dispositif suivant la revendication 6, caractérisé en ce que les moyens de décision comprennent une mémoire de contrôle (56) et la logique (58), en sorte que la logique (58) surveille le contenu total de la mémoire (56), correspondant à une multiplicité de caractères à transmettre ensuite, et en ce qu'elle vérifie les caractères en ce qu'ils appartiennent aux différents ensembles de caractères (15, 17, 19, 21).

8. Dispositif suivant la revendication 5, caractérisé en ce que, comme moyen de décision, on utilise une touche (51) du clavier (44) lors de la manœuvre de laquelle l'écriture générale en majuscules est instituée.

9. Dispositif suivant les revendications 6 et 7, caractérisé en ce que la mémoire de contrôle (56) est une région partielle de la mémoire (55) pour l'emmagasinement intermédiaire des caractères entrés.

| Codewörter | Kleinbuch-staben | Ziffern/Zeichen | Grossbuch-staben | Ziffern/Zeichen |
|---|---|---|---|---|
| 1 1 0 0 0 | a | – | A | – |
| 1 0 0 1 1 | b | ? | B | ? |
| 0 1 1 1 0 | c | : | C | : |
| 1 0 0 1 0 | d | ✠ | D | ✠ |
| 1 0 0 0 0 | e | 3 | E | 3 |
| 1 0 1 1 0 | f | ü | F | Ü |
| 0 1 0 1 1 | g | ö | G | Ö |
| 0 0 1 0 1 | h | ä | H | Ä |
| 0 1 1 0 0 | i | 8 | I | ·8 |
|  |  15 |  17 |  19 |  21 |

12

| 0 0 0 1 0 | Wagenrücklauf |
| 0 1 0 0 0 | Zeilenvorschub |

13

| 1 1 0 1 1 | Ziffern-Umschaltung |
| 1 1 1 1 1 | Buchstaben-Umschaltung |

14

31    30

Fig. 1

Fig.2

| Umschalt-Codewort | Umschaltung | |
|---|---|---|
| | von Zeichensatz | nach Zeichensatz |
| 30 —[1 1 0 1 1] | 15 ———▶ 17<br>oder 19 ———▶ 21 | |
| 31 —[1 1 1 1 1] | 15 ———▶ 19 für einzelne Grossbuchstaben<br>oder 17 ———▶ 15<br>oder 19 ———▶ 15<br>oder 21 ———▶ 19 | |
| 30              31<br>[1 1 0 1 1] + [1 1 1 1 1] | 15 ———▶ 19 für Folge von mehreren Gross-buchstaben | |
| 31              31<br>[1 1 1 1 1] + [1 1 1 1 1] | 15 ———▶ 15 | |
| 31              30<br>[1 1 1 1 1] + [1 1 0 1 1] | 15 ———▶ 17 | |

Fig. 3

13